# EUROPEAN PATENT APPLICATION

(11) **EP 4 400 198 A1**
(43) Date of publication of application: **17.07.2024**
(21) Application number: 22867286.1
(22) Date of filing: 01.09.2022
(51) Int. Cl.: B01D 53/04, B01D 53/44, B01D 53/81

(54) **STRUCTURE FOR ATTACHING ADSORPTION-DESORPTION MEMBER**

(30) Priority: 07.09.2021 JP 2021145152
(71) Applicant: TOYOBO MC Corporation, Osaka 530-0001 (JP)
(72) Inventor: ONO, Kazuyuki, Osaka-shi, Osaka 530-0001 (JP); KOHNO, Daiki, Osaka-shi, Osaka 530-0001 (JP)
(74) Representative: Vossius & Partner Patentanwälte Rechtsanwälte mbB
(86) International application number: PCT/JP2022/032999
(87) International publication number: WO 2023/037964

(57) **Abstract**

In an upper portion in the inside of an adsorption and desorption treatment apparatus (100), a plate-shaped member (3) provided with an open hole (3A) for insertion of an adsorption and desorption member (15) is arranged. The adsorption and desorption member (15) includes a cylindrical adsorption and desorption element (131) and an attachment plate (2) including a flange portion (2F). An attachment region (1A) is provided at a position where the flange portion (2F) and the plate-shaped member (3) are superimposed on each other when the adsorption and desorption member (15) is accommodated in the inside of the adsorption and desorption treatment apparatus (100) by being inserted in the open hole (3A). In the attachment region (1A), a bolt (4) inserted in a hole portion (2a) is screwed into a threaded recess (3a) and a flange portion (2F) side is tightened, so that hermetic sealing at a position where a gap between the flange portion (2F) and the plate-shaped member (3) and the threaded recess (3a) are contiguous is achieved and a leakage cut-off structure that cuts off leakage of raw gas or carrier gas from a plate-shaped member (3) side toward a flange portion (2F) side is formed.

## Description

### TECHNICAL FIELD

The present disclosure relates to a structure for attachment of an adsorption and desorption member.

### BACKGROUND ART

An adsorption and desorption treatment apparatus including an adsorption and desorption member including an adsorption and desorption element has conventionally been known as an organic solvent containing gas treatment system that cleans raw gas containing an organic solvent by separating the organic solvent from raw gas and emits cleaned gas and recovers the organic solvent separated from the raw gas with carrier gas (see PTL 1, PTL 2, and PTL 3).

### CITATION LIST

### PATENT LITERATURE

PTL 1: Chinese Utility Model CN211098282U
PTL 2: Chinese Utility Model CN212327833U
PTL 3: WO2020/054603

### SUMMARY OF INVENTION

### TECHNICAL PROBLEM

Pursuant to worldwide emission control, removal of an organic solvent to an extremely low concentration has recently been demanded. An adsorption and desorption element lowered in adsorption and desorption efficiency with use thereof should be replaced. In the adsorption and desorption treatment apparatus described in PTL 1 to PTL 3, however, in replacement of the adsorption and desorption member including the adsorption and desorption element, gas may slightly leak through a gap or the like around a bolt in an attachment region of the adsorption and desorption member. In consideration of emission control, emission of even a small amount of uncleaned gas to the atmosphere is not preferred.

An object of the present disclosure is to provide a structure for attachment of an adsorption and desorption member that prevents gas leakage in an attachment region involved with replacement of the adsorption and desorption member.

### SOLUTION TO PROBLEM

A structure for attachment of an adsorption and desorption member in the present disclosure relates to a structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas. In an upper portion in inside of the adsorption and desorption treatment apparatus, a plate-shaped member is arranged, the plate-shaped member being provided with one open hole or at least two open holes for insertion of the adsorption and desorption member. The adsorption and desorption member includes a cylindrical adsorption and desorption element and an attachment plate, the attachment plate being provided on an upper surface of the adsorption and desorption element and including a flange portion that extends outward from an edge of the adsorption and desorption element. An attachment region is provided at a position where the flange portion and the plate-shaped member are superimposed on each other when the adsorption and desorption member is accommodated in the inside of the adsorption and desorption treatment apparatus by being inserted in the open hole. The attachment region includes a bolt. The flange portion is provided with a hole portion. The bolt is fixed on a plate-shaped member side. In the attachment region, by tightening of the bolt inserted in the hole portion from a flange portion side to achieve hermetic sealing at a position where the flange portion and the plate-shaped member are contiguous, a leakage cut-off structure is formed, the leakage cut-off structure cutting off leakage of raw gas or carrier gas from the plate-shaped member side toward the flange portion side.

A structure for attachment of an adsorption and desorption member in the present disclosure relates to a structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas. In an upper portion in inside of the adsorption and desorption treatment apparatus, a plate-shaped member is arranged, the plate-shaped member being provided with one open hole or at least two open holes for insertion of the adsorption and desorption member. The adsorption and desorption member includes a cylindrical adsorption and desorption element and an attachment plate, the attachment plate being provided on an upper surface of the adsorption and desorption element and including a flange portion that extends outward from an edge of the adsorption and desorption element. An attachment region is provided at a position where the flange portion and the plate-shaped member are superimposed on each other when the adsorption and desorption member is accommodated in the inside of the adsorption and desorption treatment apparatus by being inserted in the open hole. The attachment region includes a threaded rod and a nut. The flange portion is provided with a hole portion. The plate-shaped member includes a threaded portion. In the attachment region, by tightening of a flange portion side of the threaded rod inserted in the hole portion and screwed to the threaded portion and coverage of an end of the threaded portion with a hermetic sealing member to achieve hermetic sealing at a position where a gap between the flange portion and the plate-shaped member and the hermetic sealing member are contiguous, a leakage cut-off structure is formed, the leakage cut-off structure cutting off leakage of raw gas or carrier gas from a plate-shaped member side toward the flange portion side.

A structure for attachment of an adsorption and desorption member in the present disclosure relates to a structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas. In an upper portion in inside of the adsorption and desorption treatment apparatus, a plate-shaped member is arranged, the plate-shaped member being provided with one open hole or at least two open holes for insertion of the adsorption and desorption member. The adsorption and desorption member includes a cylindrical adsorption and desorption element and an attachment plate, the attachment plate being provided on an upper surface of the adsorption and desorption element and including a flange portion that extends outward from an edge of the adsorption and desorption element. An attachment region is provided at a position where the flange portion and the plate-shaped member are superimposed on each other when the adsorption and desorption member is accommodated in the inside of the adsorption and desorption treatment apparatus by being inserted in the open hole. The attachment region includes a hexagon head bolt, an O ring, and a nut. The flange portion is provided with a hole portion. The plate-shaped member includes a threaded portion. In the attachment region, by screwing of the hexagon head bolt inserted in the hole portion to the threaded portion, tightening with the nut, of a screw portion of the hexagon head bolt inserted into the hole portion in the flange portion, and hermetic sealing of at least one of the hole portion and the threaded portion with the O ring to achieve hermetic sealing at a position where a gap between the flange portion and the plate-shaped member and the O ring are contiguous, a leakage cut-off structure is formed, the leakage cut-off structure cutting off leakage of raw gas or carrier gas from a plate-shaped member side toward a flange portion side.

A structure for attachment of an adsorption and desorption member in the present disclosure relates to a structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas. In an upper portion in inside of the adsorption and desorption treatment apparatus, a plate-shaped member is arranged, the plate-shaped member being provided with one open hole or at least two open holes for insertion of the adsorption and desorption member. The adsorption and desorption member includes a cylindrical adsorption and desorption element and an attachment plate, the attachment plate being provided on an upper surface of the adsorption and desorption element and including a flange portion that extends outward from an edge of the adsorption and desorption element. An attachment region is provided at a position where the flange portion and the plate-shaped member are superimposed on each other when the adsorption and desorption member is accommodated in the inside of the adsorption and desorption treatment apparatus by being inserted in the open hole. The attachment region includes a hexagon head bolt and a nut. The flange portion is provided with a hole portion. The plate-shaped member includes a threaded portion. In the attachment region, by screwing of the hexagon head bolt inserted in the hole portion to the threaded portion, tightening with the nut, of a plate-shaped member side of the hexagon head bolt, and full-circle welding around a head of the hexagon head bolt on a flange portion side to achieve hermetic sealing at a position where a welded portion and a gap between the flange portion and the plate-shaped member are contiguous, a leakage cut-off structure is formed, the leakage cut-off structure cutting off leakage of raw gas or carrier gas from the plate-shaped member side toward the flange portion side.

A structure for attachment of an adsorption and desorption member in the present disclosure relates to a structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas. In an upper portion in inside of the adsorption and desorption treatment apparatus, a plate-shaped member is arranged, the plate-shaped member being provided with one open hole or at least two open holes for insertion of the adsorption and desorption member. The adsorption and desorption member includes a cylindrical adsorption and desorption element and an attachment plate, the attachment plate being provided on an upper surface of the adsorption and desorption element and including a flange portion that extends outward from an edge of the adsorption and desorption element. An attachment region is provided at a position where the flange portion and the plate-shaped member are superimposed on each other when the adsorption and desorption member is accommodated in the inside of the adsorption and desorption treatment apparatus by being inserted in the open hole. The attachment region includes a bolt and a base fixed onto the plate-shaped member. The flange portion is provided with a hole portion. The base includes a threaded portion. In the attachment region, by screwing of the bolt inserted in the hole portion to the threaded portion and tightening of a flange portion side to achieve hermetic sealing at a position where the flange portion and the base are contiguous and the base and the plate-shaped member are contiguous, a leakage cut-off structure is formed, the leakage cut-off structure cutting off leakage of raw gas or carrier gas from a plate-shaped member side toward a flange portion side.

In the structure for attachment of the adsorption and desorption member, the plate-shaped member includes a threaded recess. In the attachment region, by screwing of the bolt inserted in the hole portion to the threaded recess and tightening of the flange portion side to achieve hermetic sealing at a position where a gap between the flange portion and the plate-shaped member and the threaded recess are contiguous, the leakage cut-off structure is formed, the leakage cut-off structure cutting off leakage of raw gas or carrier gas from the plate-shaped member side toward the flange portion side.

In the structure for attachment of the adsorption and desorption member, the bolt is perpendicularly welded onto the plate-shaped member. In the attachment region, by tightening of the flange portion side of the bolt inserted in the hole portion to achieve hermetic sealing at a position where a gap between the flange portion and the plate-shaped member and a welded portion of the bolt are contiguous, the leakage cut-off structure is formed, the leakage cut-off structure cutting off leakage of raw gas or carrier gas from the plate-shaped member side toward the flange portion side.

In the structure for attachment of the adsorption and desorption member, the leakage cut-off structure includes a sealing member on a lower surface of the flange portion at a position on a side of the adsorption and desorption element when viewed from the hole portion.

### ADVANTAGEOUS EFFECTS OF INVENTION

According to this disclosure, a structure for attachment of an adsorption and desorption member that prevents gas leakage in an attachment region involved with replacement of the adsorption and desorption member can be provided.

### BRIEF DESCRIPTION OF DRAWINGS

Fig. 1 is a diagram schematically showing a construction of an organic solvent containing gas treatment system in a first embodiment.
Fig. 2 is an enlarged view of an attachment region.
Fig. 3 is a plan view of an adsorption and desorption treatment apparatus with some adsorption and desorption members having been removed.
Fig. 4 is an enlarged view of a C portion in Fig. 2.
Fig. 5 is an enlarged view of an attachment region in a second embodiment.
Fig. 6 is an enlarged view of an attachment region in a third embodiment.
Fig. 7 is an enlarged view of an attachment region in a fourth embodiment.
Fig. 8 is an enlarged view of an attachment region in a fifth embodiment.
Fig. 9 is an enlarged view of an attachment region in a reference example.
Fig. 10 is an enlarged view of an attachment region in a sixth embodiment.
Fig. 11 is an enlarged view of an attachment region in a seventh embodiment.
Fig. 12 is an enlarged view of an attachment region in an eighth embodiment.
Fig. 13 is an enlarged view of an attachment region in a ninth embodiment.
Fig. 14 is an enlarged view of an attachment region in a tenth embodiment.

### DESCRIPTION OF EMBODIMENTS

A structure for attachment of an adsorption and desorption member in each embodiment based on the present disclosure will be described below with reference to the drawings. When the number or an amount is mentioned in an embodiment described below, the scope of the present disclosure is not necessarily limited to the number or the amount unless otherwise specified. The same or corresponding elements have the same reference characters allotted and redundant description may not be repeated. Combination of features in the embodiment as appropriate is originally intended.

### [First Embodiment]

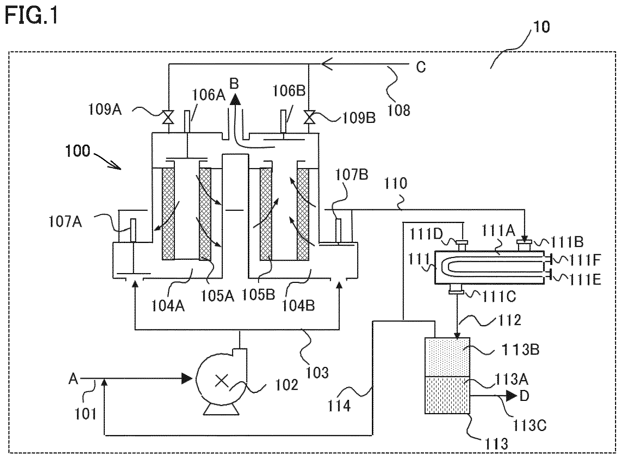

Fig. 1 is a diagram schematically showing a construction of an organic solvent containing gas treatment system in the present embodiment. As shown in Fig. 1, in an adsorption and desorption treatment apparatus 100 in an organic solvent containing gas treatment system 10, yet-to-be-treated gas A containing an organic solvent passes through a yet-to-be-treated gas line 101, and is sent by a yet-to-be-treated gas blower 102 through an adsorption gas line 103 to adsorbers 104A and 104B in an adsorption step as a result of opening and closing of upper dampers 106A and 106B and lower dampers 107A and 107B. Thereafter, the organic solvent is adsorbed during passage through adsorption and desorption elements 105A and 105B in the adsorbers. Yet-to-be-treated gas A becomes clean air B and is emitted to the atmosphere.

The organic solvent adsorbed to adsorption and desorption elements 105A and 105B in respective adsorbers 104A and 104B in a desorption step as a result of opening and closing of upper dampers 106A and 106B and lower dampers 107A and 107B is desorbed by water vapor C introduced through a water vapor line 108 by water vapor valves 109A and 109B, and introduced into a condenser 111 through a desorption water vapor line 110 from a condenser inlet 111B. The liquefied and condensed organic solvent is discharged through a condenser outlet 111C, sent to a separator 113 through a condensed liquid line 112, separated into separated waste water 113A and an organic solvent 113B, and recovered as a recovered solvent D. An uncondensed organic solvent in condenser 111 and separator 113 is introduced to an upstream side of yet-to-be-treated gas blower 102 through a return gas line 114.

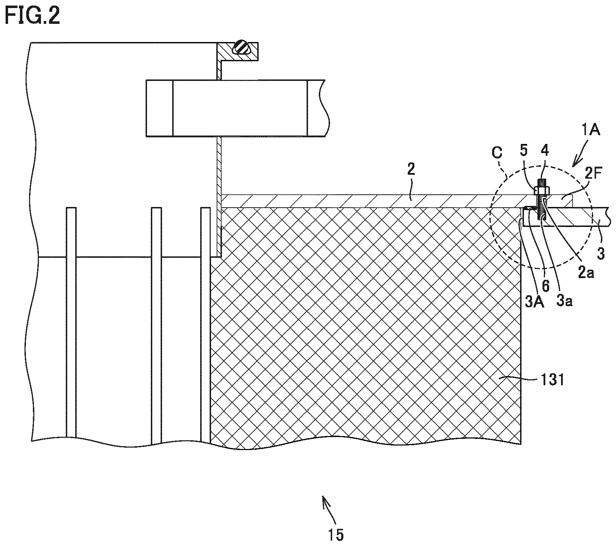

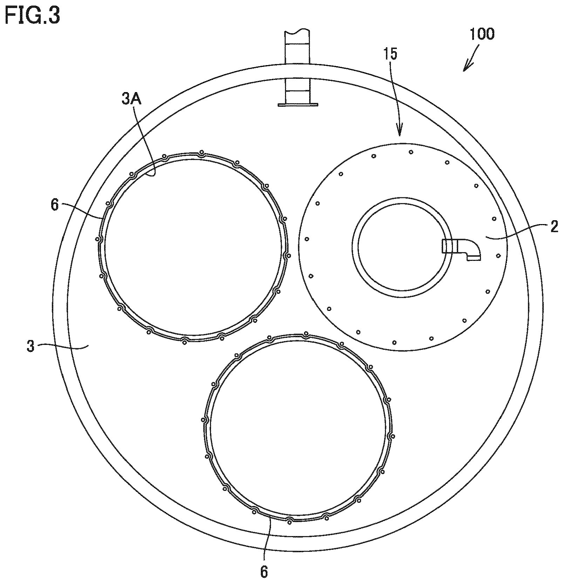

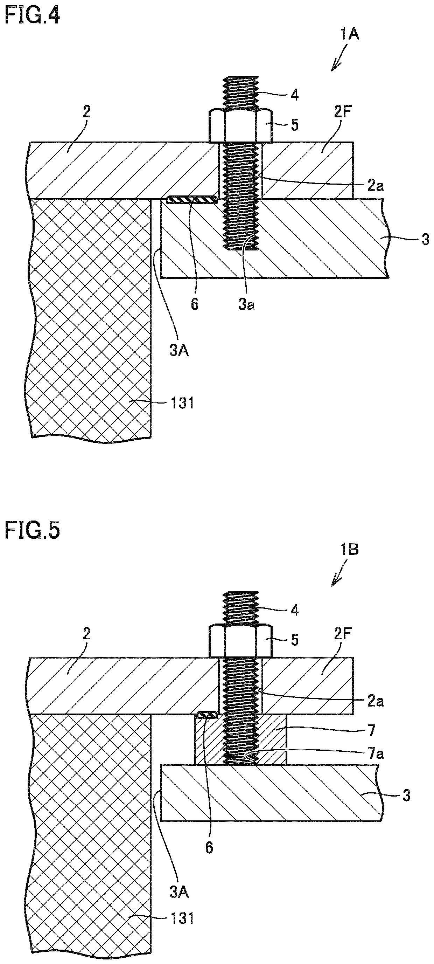

Details of adsorption and desorption treatment apparatus 100 will be described. Fig. 2 is an enlarged view of an attachment region. Fig. 3 is a plan view of the adsorption and desorption treatment apparatus with some adsorption and desorption members having been removed. Fig. 4 is an enlarged view of a C portion in Fig. 2. Adsorption and desorption treatment apparatus 100 includes an adsorption and desorption member 15 provided with adsorption and desorption elements 105A and 105B shown in Fig. 1, adsorption and desorption elements 105A and 105B each adsorbing and desorbing the organic solvent. Adsorption and desorption elements 105A and 105B shown in Fig. 1 will collectively be explained as an adsorption and desorption element 131 below.

As shown in Figs. 2 to 4, adsorption and desorption member 15 includes cylindrical adsorption and desorption element 131 and an attachment plate 2 provided on an upper surface of adsorption and desorption element 131 and including a flange portion 2F that extends outward from an edge of adsorption and desorption element 131.

As shown in Fig. 3, in an upper portion in the inside of adsorption and desorption treatment apparatus 100, a plate-shaped member 3 provided with three open holes 3A for insertion of adsorption and desorption member 15 is arranged. Fig. 3 shows a state in which adsorption and desorption member 15 is attached to one of three open holes 3A. Adsorption and desorption member 15 is accommodated as being suspended in the inside of adsorption and desorption treatment apparatus 100 by insertion of cylindrical adsorption and desorption element 131 in open hole 3A and layering of flange portion 2F and plate-shaped member 3 on each other. As shown in Fig. 4, in accommodation of adsorption and desorption element 131 in the inside of adsorption and desorption treatment apparatuses 100, a region provided at a position where flange portion 2F and plate-shaped member 3 are superimposed on each other is referred to as an attachment region. The attachment region is described as an attachment region 1A with reference to Figs. 2 and 4.

As shown in Fig. 4, attachment region 1A includes attachment plate 2, plate-shaped member 3, a threaded rod 4, a nut 5, and a sealing member 6. Attachment plate 2 is provided with a hole portion 2a in flange portion 2F. Plate-shaped member 3 is provided with a threaded recess 3a. In attachment region 1A, threaded rod 4 inserted in hole portion 2a is screwed to threaded recess 3a. A flange portion 2F side of threaded rod 4 is then tightened with the use of nut 5.

For example, soft gasket can be used for sealing member 6. Sealing member 6 is arranged on a lower surface of flange portion 2F at a position on an adsorption and desorption element 131 side when viewed from threaded rod 4. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and threaded recess 3a are contiguous is thus achieved to form a leakage cut-off structure that cuts off leakage of raw gas or carrier gas from a plate-shaped member 3 side toward a flange portion 2F side.

According to the structure for attachment of adsorption and desorption member 15 in the first embodiment, the leakage cut-off structure can be formed to prevent gas leakage in attachment region 1A involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [Second Embodiment]

Fig. 5 is an enlarged view of an attachment region in a second embodiment. An attachment region 1B in the second embodiment includes attachment plate 2, plate-shaped member 3, threaded rod 4, nut 5, sealing member 6, and a base 7. Attachment plate 2 is provided with hole portion 2a in flange portion 2F. Base 7 is fixed onto plate-shaped member 3 and provided with a threaded recess 7a. In attachment region 1B, threaded rod 4 inserted in hole portion 2a is screwed to threaded recess 7a. The flange portion 2F side of threaded rod 4 is then tightened with the use of nut 5.

For example, soft gasket can be used for sealing member 6. Sealing member 6 is arranged on the lower surface of flange portion 2F at a position on the adsorption and desorption element 131 side when viewed from threaded rod 4. Sealing member 6 is arranged annularly around open hole 3A in plate-shaped member 3. Sealing member 6 annularly improves hermeticity by being compressed between flange portion 2F and base 7 at the time of attachment of adsorption and desorption member 15.

Hermetic sealing at a position where flange portion 2F and base 7 are contiguous and base 7 and plate-shaped member 3 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the second embodiment, the leakage cut-off structure can be formed to prevent gas leakage in attachment region 1B involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

The threaded recess may be provided in both of base 7 and plate-shaped member 3. Though base 7 should only be fixed to plate-shaped member 3 by welding or the like, it may integrally be molded with plate-shaped member 3.

### [Third Embodiment]

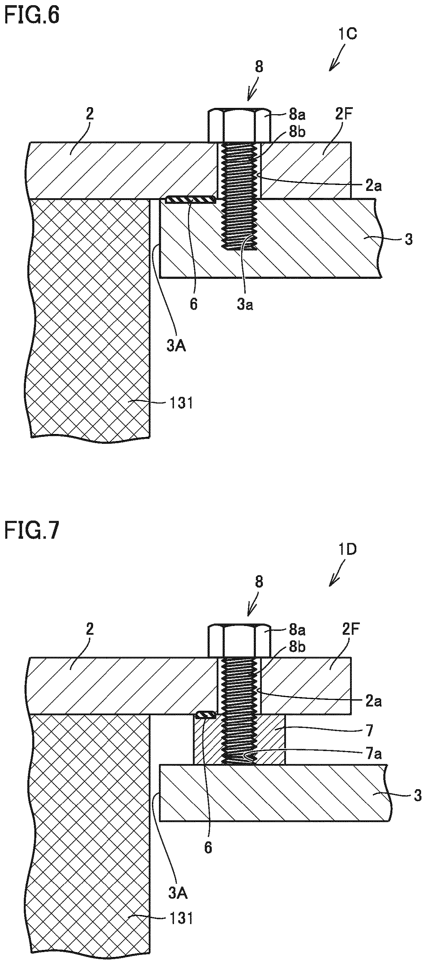

Fig. 6 is an enlarged view of an attachment region in a third embodiment. An attachment region 1C in the third embodiment includes attachment plate 2, plate-shaped member 3, a hexagon head bolt 8, and sealing member 6. Attachment plate 2 is provided with hole portion 2a in flange portion 2F. Plate-shaped member 3 is provided with threaded recess 3a. In attachment region 1C, the flange portion 2F side is tightened by tightening of a head 8a of hexagon head bolt 8 inserted in hole portion 2a to screw a screw portion 8b of hexagon head bolt 8 to threaded recess 3a.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and threaded recess 3a are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the third embodiment, the leakage cut-off structure can be formed to prevent gas leakage in attachment region 1C involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [Fourth Embodiment]

Fig. 7 is an enlarged view of an attachment region in a fourth embodiment. An attachment region 1D in the fourth embodiment includes attachment plate 2, plate-shaped member 3, hexagon head bolt 8, sealing member 6, and base 7. Attachment plate 2 is provided with hole portion 2a in flange portion 2F. Base 7 is fixed onto plate-shaped member 3 and provided with threaded recess 7a. In attachment region 1D, the flange portion 2F side is tightened by tightening of head 8a of hexagon head bolt 8 inserted in hole portion 2a to screw screw portion 8b of hexagon head bolt 8 to threaded recess 7a.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A in plate-shaped member 3. Sealing member 6 annularly improves hermeticity by being compressed between flange portion 2F and base 7 at the time of attachment of adsorption and desorption member 15.

Hermetic sealing at a position where flange portion 2F and base 7 are contiguous and base 7 and plate-shaped member 3 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the fourth embodiment, the leakage cut-off structure can be formed to prevent gas leakage in attachment region 1D involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

The threaded recess may be provided in both of base 7 and plate-shaped member 3. Though base 7 should only be fixed to plate-shaped member 3 by welding or the like, it may integrally be molded with plate-shaped member 3.

### [Fifth Embodiment]

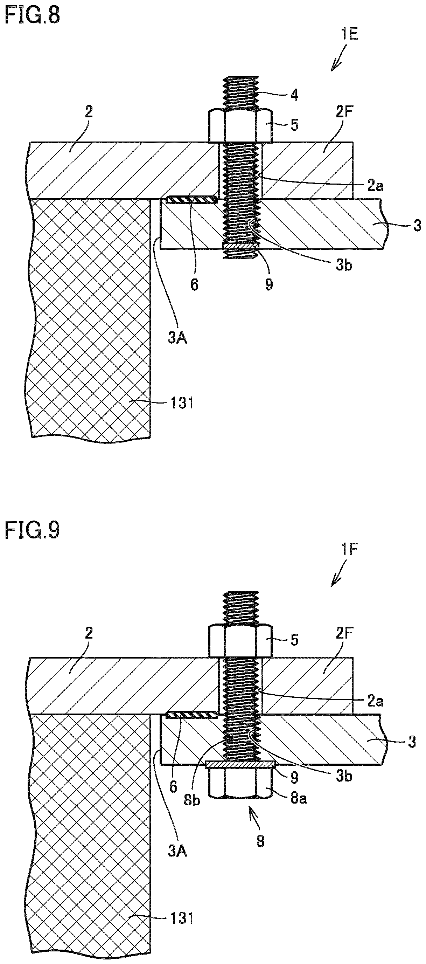

Fig. 8 is an enlarged view of an attachment region in a fifth embodiment. An attachment region 1E in the fifth embodiment includes attachment plate 2, plate-shaped member 3, threaded rod 4, nut 5, and sealing member 6. Attachment plate 2 is provided with hole portion 2a in flange portion 2F. Plate-shaped member 3 is provided with a threaded portion 3b. In attachment region 1E, the flange portion 2F side of threaded rod 4 inserted in hole portion 2a and screwed to threaded portion 3b is tightened with the use of nut 5. Threaded rod 4 is fixed as extending off from an end surface of plate-shaped member 3. A position where an end of threaded rod 4 that extends off from the end surface of plate-shaped member 3 and plate-shaped member 3 intersect with each other is then welded by full-circle welding by a welding member 9 as a hermetic sealing member.

For example, soft gasket can be used for sealing member 6. Sealing member 6 is arranged on the lower surface of flange portion 2F at a position on the adsorption and desorption element 131 side when viewed from threaded rod 4. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and welding member 9 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the fifth embodiment, the leakage cut-off structure can be formed to prevent gas leakage in attachment region 1E involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [Reference Example]

Fig. 9 is an enlarged view of an attachment region in a reference example. An attachment region 1F in the reference example includes attachment plate 2, plate-shaped member 3, hexagon head bolt 8, nut 5, and sealing member 6. Attachment plate 2 is provided with hole portion 2a in flange portion 2F. Plate-shaped member 3 is provided with threaded portion 3b. In attachment region 1F, screw portion 8b of hexagon head bolt 8 is screwed to threaded portion 3b by tightening of head 8a of hexagon head bolt 8 on the plate-shaped member 3 side. In attachment region 1F, screw portion 8b of hexagon head bolt 8 inserted in hole portion 2a in flange portion 2F is tightened with the use of nut 5 on the flange portion 2F side. A position where the end surface of plate-shaped member 3 and head 8a of hexagon head bolt 8 intersect with each other is then welded by full-circle welding by welding member 9 as a hermetic sealing member.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and welding member 9 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the reference example, the leakage cut-off structure can be formed to prevent gas leakage in attachment region 1F involved with replacement of adsorption and desorption member 15. Therefore, uncleaned gas can be prevented from being emitted to the atmosphere and a first adsorption and desorption treatment apparatus 100 can be used for a long period simply by replacement of adsorption and desorption member 15.

### [Sixth Embodiment]

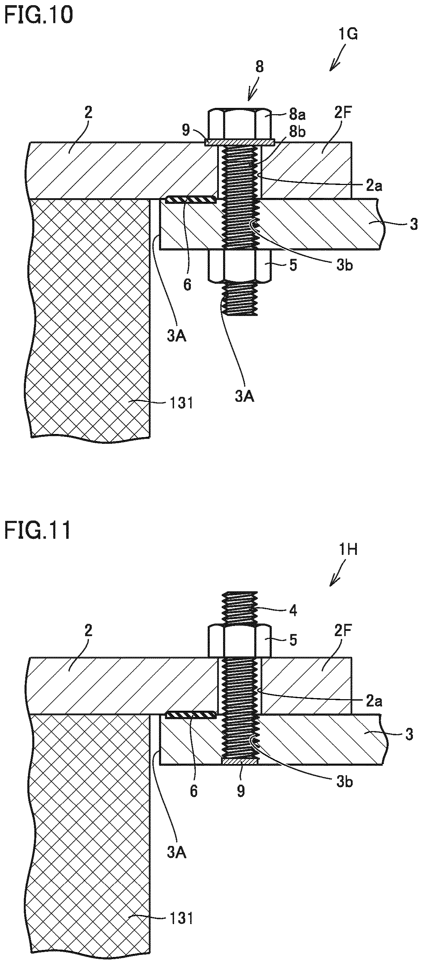

Fig. 10 is an enlarged view of an attachment region in a sixth embodiment. An attachment region 1G in the sixth embodiment includes attachment plate 2, plate-shaped member 3, hexagon head bolt 8, nut 5, and sealing member 6. Attachment plate 2 is provided with hole portion 2a in flange portion 2F. Plate-shaped member 3 is provided with threaded portion 3b. In attachment region 1G, screw portion 8b of hexagon head bolt 8 inserted in hole portion 2a in flange portion 2F is screwed to threaded portion 3b. In attachment region 1F, head 8a of hexagon head bolt 8 on the flange portion 2F side is tightened and the plate-shaped member 3 side is tightened with the use of nut 5. A position where the end surface of flange portion 2F and head 8a of hexagon head bolt 8 intersect with each other is then welded by full-circle welding by welding member 9 as a hermetic sealing member.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and welding member 9 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the sixth embodiment, the leakage cut-off structure can be formed to prevent gas leakage in attachment region 1G involved with replacement of adsorption and desorption member 15. Therefore, uncleaned gas can be prevented from being emitted to the atmosphere and first adsorption and desorption treatment apparatus 100 can be used for a long period simply by replacement of adsorption and desorption member 15.

### [Seventh Embodiment]

Fig. 11 is an enlarged view of an attachment region in a seventh embodiment. An attachment region 1H in the seventh embodiment includes attachment plate 2, plate-shaped member 3, threaded rod 4, nut 5, and sealing member 6. Attachment plate 2 is provided with hole portion 2a in flange portion 2F. Plate-shaped member 3 is provided with threaded portion 3b. In attachment region 1H, the flange portion 2F side of threaded rod 4 inserted in hole portion 2a and screwed to threaded portion 3b is tightened with the use of nut 5. Threaded rod 4 is fixed at a position flush with the end surface of plate-shaped member 3. A position where the end surface of plate-shaped member 3 and the end of threaded rod 4 intersect with each other is then welded by full-circle welding by welding member 9 as a hermetic sealing member.

For example, soft gasket can be used for sealing member 6. Sealing member 6 is arranged on the lower surface of flange portion 2F at a position on the adsorption and desorption element 131 side when viewed from threaded rod 4. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and welding member 9 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the seventh embodiment, the leakage cut-off structure can be formed to prevent gas leakage in attachment region 1H involved with replacement of adsorption and desorption member 15. Therefore, uncleaned gas can be prevented from being emitted to the atmosphere and first adsorption and desorption treatment apparatus 100 can be used for a long period simply by replacement of adsorption and desorption member 15.

### [Eighth Embodiment]

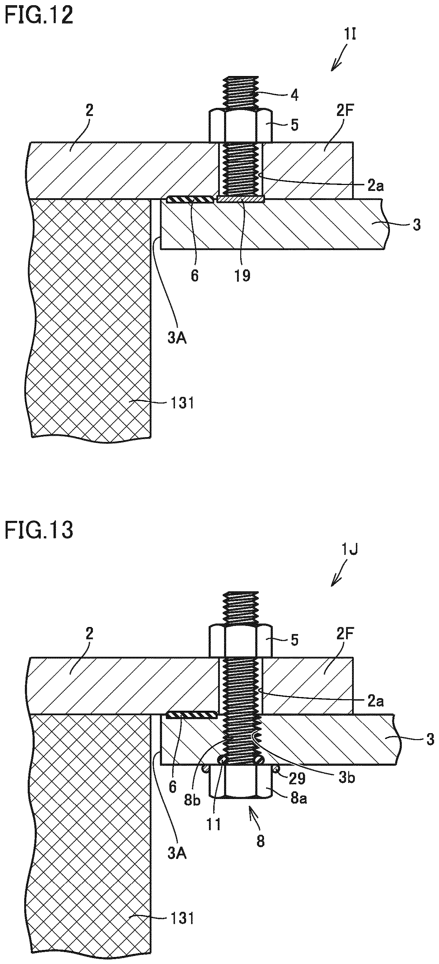

Fig. 12 is an enlarged view of an attachment region in an eighth embodiment. An attachment region 11 in the eighth embodiment includes attachment plate 2, plate-shaped member 3, threaded rod 4, nut 5, and sealing member 6. Attachment plate 2 is provided with hole portion 2a in flange portion 2F. On plate-shaped member 3, threaded rod 4 is attached perpendicularly to plate-shaped member 3 by stud welding. Plate-shaped member 3 and threaded rod 4 are joined at a welded portion 19.

Stud welding refers to a welding method of causing discharging by feeding a current between threaded rod 4 as a stud material and plate-shaped member 3 as a base material to melt and join the stud material and the base material to each other. Fixing of threaded rod 4 in place in plate-shaped member 3 can be facilitated by performing a roughening process onto plate-shaped member 3 prior to stud welding. Alternatively, perpendicular welding of threaded rod 4 can be facilitated by providing a pilot hole in plate-shaped member 3 prior to stud welding.

For example, soft gasket can be used for sealing member 6. Sealing member 6 is arranged on the lower surface of flange portion 2F at a position on the adsorption and desorption element 131 side when viewed from threaded rod 4. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

In attachment region 1I, the flange portion 2F side of threaded rod 4 inserted in hole portion 2a is tightened with the use of nut 5, so that a position where a gap between flange portion 2F and plate-shaped member 3 and welded portion 19 of threaded rod 4 are contiguous is achieved to form a leakage cut-off structure that cuts off leakage of raw gas or carrier gas from the plate-shaped member 3 side toward the flange portion 2F side.

According to the structure for attachment of adsorption and desorption member 15 in the eighth embodiment, the leakage cut-off structure can be formed to prevent gas leakage in attachment region 1I involved with replacement of adsorption and desorption member 15. Therefore, uncleaned gas can be prevented from being emitted to the atmosphere and first adsorption and desorption treatment apparatus 100 can be used for a long period simply by replacement of adsorption and desorption member 15.

### [Ninth Embodiment]

Fig. 13 is an enlarged view of an attachment region in a ninth embodiment. An attachment region 1J in the ninth embodiment includes attachment plate 2, plate-shaped member 3, hexagon head bolt 8, nut 5, sealing member 6, and an O ring 11. Attachment plate 2 is provided with hole portion 2a in flange portion 2F. Plate-shaped member 3 is provided with threaded portion 3b. O ring 11 is a material made of rubber that functions as a hermetic sealing member arranged between head 8a of hexagon head bolt 8 and plate-shaped member 3 and achieves hermetic sealing by being collapsed.

In attachment region 1J, screw portion 8b of hexagon head bolt 8 is screwed to threaded portion 3b by tightening of head 8a of hexagon head bolt 8 on the plate-shaped member 3 side. In attachment region 1J, screw portion 8b of hexagon head bolt 8 inserted in hole portion 2a in flange portion 2F is tightened with the use of nut 5 on the flange portion 2F side. A position where the end surface of plate-shaped member 3 and head 8a of hexagon head bolt 8 intersect with each other is then welded by spot welding by a welding member 29 at a plurality of locations (for example, two locations). A gap between head 8a of hexagon head bolt 8 and plate-shaped member 3 is hermetically sealed by O ring 11.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and O ring 11 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the ninth embodiment, the leakage cut-off structure can be formed to prevent gas leakage in attachment region 1J involved with replacement of adsorption and desorption member 15. Therefore, uncleaned gas can be prevented from being emitted to the atmosphere and first adsorption and desorption treatment apparatus 100 can be used for a long period simply by replacement of adsorption and desorption member 15.

### [Tenth Embodiment]

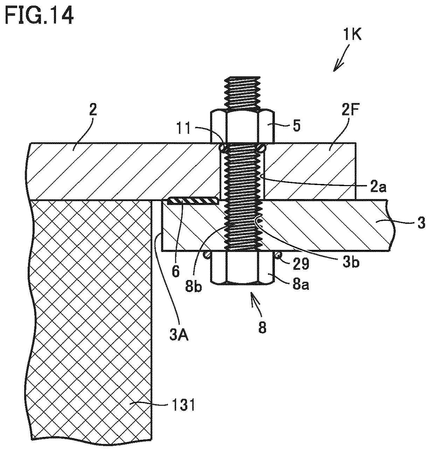

Fig. 14 is an enlarged view of an attachment region in a tenth embodiment. An attachment region 1K in the tenth embodiment includes attachment plate 2, plate-shaped member 3, hexagon head bolt 8, nut 5, sealing member 6, and O ring 11. Attachment plate 2 is provided with hole portion 2a in flange portion 2F. Plate-shaped member 3 is provided with threaded portion 3b. O ring 11 is a material made of rubber that functions as a hermetic sealing member arranged between nut 5 and flange portion 2F and achieves hermetic sealing by being collapsed.

In attachment region 1K, screw portion 8b of hexagon head bolt 8 is screwed to threaded portion 3b by tightening of head 8a of hexagon head bolt 8 on the plate-shaped member 3 side. In attachment region 1K, screw portion 8b of hexagon head bolt 8 inserted in hole portion 2a in flange portion 2F is tightened with the use of nut 5 on the flange portion 2F side. A position where the end surface of plate-shaped member 3 and head 8a of hexagon head bolt 8 intersect with each other is then welded by spot welding by welding member 29 at a plurality of locations (for example, two locations). A gap between nut 5 and flange portion 2F is hermetically sealed by O ring 11.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A in plate-shaped member 3. Sealing member 6 annularly improves hermeticity by being compressed between flange portion 2F and plate-shaped member 3 at the time of attachment of adsorption and desorption member 15.

Hermetic sealing at a position where a gap between flange portion 2F and plate-shaped member 3 and O ring 11 are contiguous is thus achieved to form a leakage cut-off structure that cuts off leakage of raw gas or carrier gas from the plate-shaped member 3 side toward the flange portion 2F side.

According to the structure for attachment of adsorption and desorption member 15 in the tenth embodiment, the leakage cut-off structure can be formed to prevent gas leakage in attachment region 1K involved with replacement of adsorption and desorption member 15. Therefore, uncleaned gas can be prevented from being emitted to the atmosphere and first adsorption and desorption treatment apparatus 100 can be used for a long period simply by replacement of adsorption and desorption member 15.

### [Other Embodiments]

In the embodiments, sealing member 6 does not have to be provided. In order to facilitate positioning of sealing member 6, an annular groove may be provided in plate-shaped member 3.

In the embodiments, one adsorption and desorption member 15, two adsorption and desorption members 15, or four or more adsorption and desorption members 15 may be provided. Adsorption and desorption element 131 may be in a shape other than a cylindrical shape. For example, adsorption and desorption element 131 may have a structure in a shape of a hollow quadrangular prism. In this case, attachment plate 2 should only be in a quadrangular shape also in conformity with the shape of adsorption and desorption element 131. A plurality of attachment regions may be aligned in a quadrangular shape in a plan view. Arrangement of the attachment regions may thus be varied in conformity with the shape of adsorption and desorption element 131.

In the embodiments, a sealing tape may be wound around a screw portion of each bolt. By winding the sealing tape, hermeticity can be enhanced and the bolt can be protected. The sealing tape is formed, for example, of a polytetrafluoroethylene material.

It should be understood that the embodiments disclosed herein are illustrative and non-restrictive in every respect. The scope of the present disclosure is defined by the terms of the claims rather than the description above and is intended to include any modifications within the scope and meaning equivalent to the terms of the claims.

### REFERENCE SIGNS LIST

1A to 1K attachment region; 2 attachment plate; 2F flange portion; 2a hole portion; 3 plate-shaped member; 3A open hole; 3a, 7a threaded recess; 3b threaded portion; 4 threaded rod; 5 nut; 6 sealing member; 7 base; 8 hexagon head bolt; 8a head; 8b screw portion; 9, 29 welding member; 10 organic solvent containing gas treatment system; 11 ring; 15 adsorption and desorption member; 19 welded portion; 100 adsorption and desorption treatment apparatus; 105A, 105B, 131 adsorption and desorption element; 101 yet-to-be-treated gas line; 102 yet-to-be-treated gas blower; 103 adsorption gas line; 104A, 104B adsorber; 106A, 106B upper damper; 107A, 107B lower damper; 108 water vapor line; 109A, 109B water vapor valve; 110 desorption water vapor line; 111 condenser; 111A cooling water pipe; 111B condenser inlet; 111C condenser outlet; 111D return gas outlet; 111E cooling water inlet; 111F cooling water outlet; 112 condensed liquid line; 113 separator; 113A separated waste water; 113B organic solvent; 113C waste liquid line; 114 return gas line; A yet-to-be-treated gas; B cleaned air; C water vapor; D recovered solvent

## Claims

1. A structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas, wherein
in an upper portion in inside of the adsorption and desorption treatment apparatus, a plate-shaped member is arranged, the plate-shaped member being provided with one open hole or at least two open holes for insertion of the adsorption and desorption member,
the adsorption and desorption member includes a cylindrical adsorption and desorption element and an attachment plate, the attachment plate being provided on an upper surface of the adsorption and desorption element and including a flange portion that extends outward from an edge of the adsorption and desorption element,
an attachment region is provided at a position where the flange portion and the plate-shaped member are superimposed on each other when the adsorption and desorption member is accommodated in the inside of the adsorption and desorption treatment apparatus by being inserted in the open hole,
the attachment region includes a bolt,
the flange portion is provided with a hole portion,
the bolt is fixed on a plate-shaped member side, and
in the attachment region, by tightening of the bolt inserted in the hole portion from a flange portion side to achieve hermetic sealing at a position where the flange portion and the plate-shaped member are contiguous, a leakage cut-off structure is formed, the leakage cut-off structure cutting off leakage of raw gas or carrier gas from the plate-shaped member side toward the flange portion side.

2. A structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas, wherein
in an upper portion in inside of the adsorption and desorption treatment apparatus, a plate-shaped member is arranged, the plate-shaped member being provided with one open hole or at least two open holes for insertion of the adsorption and desorption member,
the adsorption and desorption member includes a cylindrical adsorption and desorption element and an attachment plate, the attachment plate being provided on an upper surface of the adsorption and desorption element and including a flange portion that extends outward from an edge of the adsorption and desorption element,
an attachment region is provided at a position where the flange portion and the plate-shaped member are superimposed on each other when the adsorption and desorption member is accommodated in the inside of the adsorption and desorption treatment apparatus by being inserted in the open hole,
the attachment region includes a threaded rod and a nut,
the flange portion is provided with a hole portion,
the plate-shaped member includes a threaded portion, and
in the attachment region, by tightening of a flange portion side of the threaded rod inserted in the hole portion and screwed to the threaded portion and coverage of an end of the threaded portion with a hermetic sealing member to achieve hermetic sealing at a position where a gap between the flange portion and the plate-shaped member and the hermetic sealing member are contiguous, a leakage cut-off structure is formed, the leakage cut-off structure cutting off leakage of raw gas or carrier gas from a plate-shaped member side toward the flange portion side.

3. A structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas, wherein
in an upper portion in inside of the adsorption and desorption treatment apparatus, a plate-shaped member is arranged, the plate-shaped member being provided with one open hole or at least two open holes for insertion of the adsorption and desorption member,
the adsorption and desorption member includes a cylindrical adsorption and desorption element and an attachment plate, the attachment plate being provided on an upper surface of the adsorption and desorption element and including a flange portion that extends outward from an edge of the adsorption and desorption element,
an attachment region is provided at a position where the flange portion and the plate-shaped member are superimposed on each other when the adsorption and desorption member is accommodated in the inside of the adsorption and desorption treatment apparatus by being inserted in the open hole,
the attachment region includes a hexagon head bolt, an O ring, and a nut,
the flange portion is provided with a hole portion,
the plate-shaped member includes a threaded portion, and
in the attachment region, by screwing of the hexagon head bolt inserted in the hole portion to the threaded portion, tightening with the nut, of a screw portion of the hexagon head bolt inserted into the hole portion in the flange portion, and hermetic sealing of at least one of the hole portion and the threaded portion with the O ring to achieve hermetic sealing at a position where a gap between the flange portion and the plate-shaped member and the O ring are contiguous, a leakage cut-off structure is formed, the leakage cut-off structure cutting off leakage of raw gas or carrier gas from a plate-shaped member side toward a flange portion side.

4. A structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas, wherein
in an upper portion in inside of the adsorption and desorption treatment apparatus, a plate-shaped member is arranged, the plate-shaped member being provided with one open hole or at least two open holes for insertion of the adsorption and desorption member,
the adsorption and desorption member includes a cylindrical adsorption and desorption element and an attachment plate, the attachment plate being provided on an upper surface of the adsorption and desorption element and including a flange portion that extends outward from an edge of the adsorption and desorption element,
an attachment region is provided at a position where the flange portion and the plate-shaped member are superimposed on each other when the adsorption and desorption member is accommodated in the inside of the adsorption and desorption treatment apparatus by being inserted in the open hole,
the attachment region includes a hexagon head bolt and a nut,
the flange portion is provided with a hole portion,
the plate-shaped member includes a threaded portion, and
in the attachment region, by screwing of the hexagon head bolt inserted in the hole portion to the threaded portion, tightening with the nut, of a plate-shaped member side of the hexagon head bolt, and full-circle welding around a head of the hexagon head bolt on a flange portion side to achieve hermetic sealing at a position where a welded portion and a gap between the flange portion and the plate-shaped member are contiguous, a leakage cut-off structure is formed, the leakage cut-off structure cutting off leakage of raw gas or carrier gas from the plate-shaped member side toward the flange portion side.

5. A structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas, wherein
in an upper portion in inside of the adsorption and desorption treatment apparatus, a plate-shaped member is arranged, the plate-shaped member being provided with one open hole or at least two open holes for insertion of the adsorption and desorption member,
the adsorption and desorption member includes a cylindrical adsorption and desorption element and an attachment plate, the attachment plate being provided on an upper surface of the adsorption and desorption element and including a flange portion that extends outward from an edge of the adsorption and desorption element,
an attachment region is provided at a position where the flange portion and the plate-shaped member are superimposed on each other when the adsorption and desorption member is accommodated in the inside of the adsorption and desorption treatment apparatus by being inserted in the open hole,
the attachment region includes a bolt and a base fixed onto the plate-shaped member,
the flange portion is provided with a hole portion,
the base includes a threaded portion, and
in the attachment region, by screwing of the bolt inserted in the hole portion to the threaded portion and tightening of a flange portion side to achieve hermetic sealing at a position where the flange portion and the base are contiguous and the base and the plate-shaped member are contiguous, a leakage cut-off structure is formed, the leakage cut-off structure cutting off leakage of raw gas or carrier gas from a plate-shaped member side toward a flange portion side.

6. The structure for attachment of an adsorption and desorption member according to claim 1, wherein
the plate-shaped member includes a threaded recess, and
in the attachment region, by screwing of the bolt inserted in the hole portion to the threaded recess and tightening of the flange portion side to achieve hermetic sealing at a position where a gap between the flange portion and the plate-shaped member and the threaded recess are contiguous, the leakage cut-off structure is formed, the leakage cut-off structure cutting off leakage of raw gas or carrier gas from the plate-shaped member side toward the flange portion side.

7. The structure for attachment of an adsorption and desorption member according to claim 1, wherein
the bolt is perpendicularly welded onto the plate-shaped member, and
in the attachment region, by tightening of the flange portion side of the bolt inserted in the hole portion to achieve hermetic sealing at a position where a gap between the flange portion and the plate-shaped member and a welded portion of the bolt are contiguous, the leakage cut-off structure is formed, the leakage cut-off structure cutting off leakage of raw gas or carrier gas from the plate-shaped member side toward the flange portion side.

8. The structure for attachment of an adsorption and desorption member according to any one of claims 1 to 7, wherein
the leakage cut-off structure includes a sealing member on a lower surface of the flange portion at a position on a side of the adsorption and desorption element when viewed from the hole portion.
